(19) Europäisches Patentamt
European Patent Office
Office européen des brevets

(11) **EP 3 500 461 B1**

(12) **EUROPÄISCHE PATENTSCHRIFT**

(45) Veröffentlichungstag und Bekanntmachung des Hinweises auf die Patenterteilung:
**06.12.2023  Patentblatt 2023/49**

(21) Anmeldenummer: **17731807.8**

(22) Anmeldetag: **20.06.2017**

(51) Internationale Patentklassifikation (IPC):
**B60T 8/1766** (2006.01)

(52) Gemeinsame Patentklassifikation (CPC):
**B60T 8/1766**

(86) Internationale Anmeldenummer:
**PCT/EP2017/000711**

(87) Internationale Veröffentlichungsnummer:
**WO 2018/033229 (22.02.2018 Gazette 2018/08)**

(54) **VERFAHREN ZUM EINSTELLEN VON BREMSDRÜCKEN, BREMSANLAGE EINES KRAFTFAHRZEUGS ZUR DURCHFÜHRUNG DES VERFAHRENS SOWIE KRAFTFAHRZEUG MIT EINER SOLCHEN BREMSANLAGE**

METHOD FOR ADJUSTING BRAKE PRESSURES, BRAKE SYSTEM OF A MOTOR VEHICLE FOR CARRYING OUT THE METHOD, AND MOTOR VEHICLE COMPRISING SUCH A BRAKE SYSTEM

PROCÉDÉ DE RÉGLAGE DES PRESSIONS DE FREINAGE, SYSTÈME DE FREINAGE D'UN VÉHICULE À MOTEUR POUR LA MISE EN OEUVRE DE CE PROCÉDÉ ET VÉHICULE À MOTEUR DOTÉ D'UN TEL SYSTÈME DE FREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.08.2016  DE 102016009997**

(43) Veröffentlichungstag der Anmeldung:
**26.06.2019  Patentblatt 2019/26**

(73) Patentinhaber: **ZF CV Systems Europe BV 1170 Brussels (BE)**

(72) Erfinder:
• **FLAUM, Nikolai 30457 Hannover (DE)**

• **NGUYEN, Van Tien 30519 Hannover (DE)**
• **WALLBAUM, Torsten 31089 Duingen (DE)**

(74) Vertreter: **Rabe, Dirk-Heinrich ZF CV Systems Hannover GmbH Am Lindener Hafen 21 30453 Hannover (DE)**

(56) Entgegenhaltungen:
**EP-A2- 0 445 575          WO-A1-2011/073415 DE-A1-102008 032 544**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Einstellen von Bremsdrücken an Radbremsen eines Kraftfahrzeugs gemäß Anspruch 1. Die Erfindung betrifft außerdem gemäß Anspruch 6 eine Bremsanlage zur Durchführung des Verfahrens sowie gemäß Anspruch 8 ein Kraftfahrzeug mit einer solchen Bremsanlage.

Zum Abbremsen eines Kraftfahrzeugs werden die Räder des Kraftfahrzeugs gebremst. Hierzu weisen Radbremsen der Räder jeweils Bremszylinder auf, welche über ein Arbeitsmedium, das heißt hydraulisch oder pneumatisch, betätigt werden. Bei Nutzfahrzeugen wird der gewünschte Bremsdruck in den Bremszylindern in der Regel pneumatisch erzeugt.

Bei modernen Bremsanlagen mit Bremssteuereinheiten wird der Bremsdruck in einem Normalbremsmodus unmittelbar vom Fahrer des Kraftfahrzeugs eingestellt. Seine Fahrerbremsanforderung übermittelt der Fahrer in der Regel durch Betätigung eines Bremspedals. Typischerweise wird mittels des Bremspedals ein Betriebsbremsventil betätigt und dadurch die Bremszylinder aus einem Druckvorrat versorgt.

Alternativ zum Normalbremsmodus übernimmt die Bremssteuereinheit die Einstellung der Bremsdrücke in einem Drucksteuermodus, wobei der Bremsdruck nach den Vorgaben der Bremssteuereinheit bei Feststellen entsprechender Bremsbedürfnisse beziehungsweise Regelbedürfnisse eingestellt wird. Derartige Bremsbedürfnisse können beispielsweise die Umsetzung von Fahrstabilitätsfunktionen sein, die auf einen Druckmittelvorrat zurückgreifen, wie beispielsweise diejenige eines Antiblockiersystems (ABS) sein, wenn die Steuereinheit das Vorliegen einer Blockierneigung bestimmter Räder feststellt.

Ein Antiblockiersystem überwacht permanent über Messsignale von Drehzahlsensoren die Drehzahlen jedes Rades und ermittelt daraus den jeweiligen Radschlupf. Dies kann beispielsweise durch Vergleich der aus der Raddrehzahl ermittelten Radgeschwindigkeit mit einer Fahrzeugreferenzgeschwindigkeit erfolgen. Wird über den so ermittelten Radschlupf eine Blockierneigung des Rades erkannt, das heißt eine vorgegebene Schlupfgrenze ist erreicht, oder überschritten, übernimmt die Bremssteuereinheit die Kontrolle über die Einstellung des Bremsdrucks.

DE 10 2009 058 154 A1 offenbart eine derartige Bremsanlage, deren Bremssteuereinheit im Drucksteuermodus die Einstellung des Bremsdrucks übernimmt. Die Bremssteuereinheit übernimmt dabei auch die Einstellung des Bremsdrucks im Drucksteuermodus zur Umsetzung weiterer externer Bremsanforderungen. Externe Bremsanforderungen sind von der Fahrerbremsanforderung unabhängig und werden beispielsweise von externen Fahrerassistenzsystemen der Bremssteuereinheit vorgegeben. Fahrerassistenzsysteme als von der Bremssteuereinheit getrennt ausgeführte Systeme geben Bremsanforderungssignale, das heißt XBR-Botschaften ("eXternal Brake Request"), entsprechend der gewünschten Bremsleistung an die Bremssteuereinheit der Bremsanlage aus, beispielsweise über einen Datenbus.

Die Bremssteuereinheit muss bei der Einstellung der Bremsdrücke an den einzelnen Radbremsen des Kraftfahrzeugs ein möglichst stabiles Fahrverhalten anstreben. Dabei muss jederzeit, das heißt insbesondere bei unterschiedlichen Lasten und Beladungszuständen des Kraftfahrzeugs, der Bremsdruck an den Vorderrädern zu dem Bremsdruck an den Hinterrädern in einem derartigen Druckverteilungsverhältnis zueinander stehen, dass die Vorderachse vor der Hinterachse blockiert.

In EP 0 445 575 A1 wurde es bereits vorgeschlagen, die Bremsdrücke im Drucksteuermodus unter Regelung eines idealen Druckverteilungsverhältnisses einzustellen. Dabei wird die Druckverteilung zwischen den Achsen unter Berücksichtigung eines Differenzschlupfs zwischen diesen Achsen derart vorgenommen, dass ein möglichst geringer Differenzschlupf besteht. Der Differenzschlupf soll dabei möglichst klein gehalten werden, so dass bei idealer Druckverteilung bzw. bei idealem Druckverteilungsverhältnis sämtliche Räder des Fahrzeugs gleichzeitig oder nahezu gleichzeitig blockieren. Auf diese Weise wird die gewünschte Verzögerung in der Regel schneller erreicht. Zudem beugt die Verringerung des Differenzschlupfs beziehungsweise die Einstellung eines idealen Druckverhältnisses einem unerwünschten Eingreifen der Antiblockierfunktion vor. Ein unerwünschtes Eingreifen der Antiblockierfunktion wird solange ausgeschlossen oder erfolgt so spät, wie es aufgrund der gegebenen physikalischen Bedingungen tatsächlich möglich ist. Eine Vorgabe des Druckverteilungsverhältnisses wird dabei in Abhängigkeit des Differenzschlupfs angepasst, was im Rahmen einer Regelung eine gewisse Zeit benötigt. Leider ist ideale Druckverteilung in der aktuellen Fahrsituation eines Kraftfahrzeugs unbekannt und variiert in einem großen Bereich in Abhängigkeit von der Beladung des Kraftfahrzeugs. Die Wahrscheinlichkeit, dass eines oder mehrere der Räder zum Blockieren neigt, ist daher im praktischen Fahrbetrieb groß.

Weitere Beispiele optimierter Bremsdruckverteilungen sind aus DE 10 2008 032544 A1 und WO 2011/073415 A1 bekannt.

Der Erfindung liegt die Aufgabe zugrunde, in einem Drucksteuermodus eine möglichst schnelle Einstellung eines idealen Druckverteilungsverhältnisses durch eine Bremssteuereinheit zu ermöglichen.

Diese Aufgabe wird erfindungsgemäß durch ein Verfahren zum Einstellen von Bremsdrücken mit den Merkmalen des Anspruchs 1 gelöst. Die Aufgabe wird außerdem gemäß Anspruch 6 durch eine Bremsanlage zur Durchführung des Verfahrens sowie gemäß Anspruch 8 durch ein Kraftfahrzeug mit einer solchen Bremsanlage gelöst.

Gemäß der Erfindung wird im Normalbremsmodus ein Startwert des Druckverteilungsverhältnisses (Druckverteilungsverhältnisstartwert) für eine Regelung ermittelt und für die spätere Berücksichtigung im Drucksteuermodus abgespeichert und bereitgehalten. Der Einfluss des Beladungszustands des Nutzfahrzeugs auf das ideale Druckverteilungsverhältnis wird durch die Ermittlung des Druckverteilungsverhältnisstartwerts im Normalbremsmodus bereits berücksichtigt, so dass die Regelung auf einen bereits nahe am einzuregelnden Idealwert des Druckverteilungsverhältnisses aufsetzt. Der Druckverteilungsverhältnisstartwert stellt nämlich eine genaue Schätzung des idealen Bremsdruckverteilungsverhältnis zur Verfügung, der als Druckverteilungsverhältnisstartwert der Regelung vorgegeben werden kann. In der Regel sind nur quantitativ geringe und meist wenige Regeleingriffe erforderlich, um ausgehend von dem erfindungsgemäß ermittelten Druckverteilungsverhältnisstartwert das ideale Druckverteilungsverhältnis einzustellen. Die Regelung des idealen Druckverteilungsverhältnisses erfolgt vorzugsweise über eine Regelung des Differenzschlupfs zwischen den Achsen. Mit der Erfindung werden Druckverteilungsverhältnisstartwerte auch bei Kraftfahrzeugen mit mehr als zwei Achsen ermittelt, wobei vorzugsweise Achspaare von jeweils zwei Achsen betrachtet bzw. deren Druckverteilungsverhältnis mit erfindungsgemäß im Normalbremsmodus ermitteltem Druckverteilungsverhältnisstartwert geregelt werden. Die Ermittlung des Druckverteilungsverhältnisstartwerts im Normalbremsmodus ist mit wenig Information möglich. Gemäß der Erfindung werden die der Bremssteuereinheit zur Verfügung stehenden Drehzahlmesswerte der Räder zur Bestimmung des Druckverteilungsverhältnisstartwerts herangezogen. Der Druckverteilungsverhältnisstartwert wird dabei ermittelt, indem ein erster Drehzahlmesswert der Vorderachse und ein zweiter Drehzahlmesswert der Hinterachse erfasst werden, sowie ein Referenzwert einer Bewegungsgröße des Kraftfahrzeugs zum jeweils gleichen Messzeitpunkt ermittelt wird. Der Referenzwert kann dabei durch einen separaten Bewegungssensor des Kraftfahrzeugs erfasst oder durch Auswertungen der Drehzahlmesswerte der Achsen hergeleitet werden. Die Drehzahlmesswerte werden durch Drehzahlsensoren der jeweiligen Räder erfasst, welche signalübertragend mit der Bremssteuereinheit verbunden sind. Der erste Drehzahlmesswert der Vorderachse und der zweite Drehzahlmesswert der Hinterachse werden jeweils mit dem Referenzwert in einer dem Radschlupf an der jeweiligen Achse repräsentierenden Weise verknüpft. Auf diese Weise werden für jede Achse Schlupfwerte ermittelt, worunter sowohl der Radschlupf als auch andere physikalische Bewegungsgrößen verstanden werden, welche den Radschlupf bestimmen, beispielsweise die Geschwindigkeit oder die Beschleunigung.

Der so gebildete erste Schlupfwert bezüglich der Vorderachse und der zweite Schlupfwert bezüglich der Hinterachse werden in ein Verhältnis zueinander gesetzt und der so bestimmte Verteilungsindex mit einem vorgegebenen Druckverteilungsverhältnis verknüpft. Das vorgegebene Druckverteilungsverhältnis, welches mit dem Verteilungsindex für den erfindungsgemäßen Druckverteilungsverhältnisstartwert verknüpft, beispielsweise multipliziert wird, ist der Bremssteuereinheit fest vorgegeben oder wird im Falle eines elektronischen Bremssystems (EBS) dynamisch ermittelt.

Entsprechend der Annahme des idealen Druckverteilungsverhältnisses, dass nämlich kein Differenzschlupf zwischen den betrachteten Achsen bestehen soll, werden die ersten Schlupfwerte und die zweiten Schlupfwerte im Verteilungsindex reziprok zum Bezug auf die Achsen im Druckverteilungsverhältnis berücksichtigt. Daraus ergibt sich bei Berücksichtigung des jeweiligen Radschlupfs als zu verarbeitenden Schlupfwerten der jeweiligen Achsen die folgende Gleichung zur Bestimmung des Druckvertei lu ngsverhältnisstartwerts:

$$(P_{FA}/P_{RA}) = (\lambda_{RA}/\lambda_{FA}) \, ^* \, (P_{FA}/P_{RA})_{nonideal}$$

In der Gleichung sind die Bremsdrücke mit dem Formelzeichen "P" angegeben. Erste Schlupfwerte für die Vorderachse und zweite Schlupfwerte für die Hinterachse sind als jeweiliger Radschlupf ermittelt und in der Gleichung durch das Formelzeichen "$\lambda$" repräsentiert. Der Index "FA" steht in der Gleichung für eine der Vorderachse zugeordnete Größe. Entsprechend sind Größen, welche auf die Hinterachse bezogen sind, mit dem Index "RA" bezeichnet. Das vorgegebene Druckverteilungsverhältnis, welches als nicht ideal behandelt und erfindungsgemäß mit dem Verteilungsindex verknüpft wird, ist mit dem Index "nonideal" bezeichnet.

Vorteilhaft wird zur Bestimmung der Schlupfwerte für die jeweiligen Achsen aus dem ersten Drehzahlwert der Vorderachse und dem zweiten Drehzahlwert der Hinterachse eine translatorische Bewegungsgröße des Kraftfahrzeugs bestimmt und mit dem Referenzwert in derselben physikalischen Größe verknüpft. Wird in einer vorteilhaften Ausführungsform die Geschwindigkeit als Bewegungsgröße berücksichtigt, so werden aus den Drehzahlmesswerten der Achsen Geschwindigkeiten hergeleitet und auch der Referenzwert als Referenzgeschwindigkeit des Kraftfahrzeugs ermittelt. Daraus ergibt sich für die Bestimmung des Druckverteilungsverhältnisstartwerts die folgende Gleichung:

$$(P_{FA}/P_{RA}) = ((v_{RA}-v_{Veh})/(v_{FA}-v_{Veh})) \, ^* \, (P_{FA}/P_{RA})_{nonideal}$$

In der vorstehenden Gleichung ist die Geschwindigkeit mit dem Formelzeichen "v" bezeichnet. Der Index "Veh" bezeichnet dabei eine auf das Kraftfahrzeug bezogene Referenzgröße, das heißt hier die Referenzgeschwindigkeit des Kraftfahrzeugs.

In einer weiteren vorteilhaften Ausführungsform der Erfindung wird die Beschleunigung als Bewegungsgröße zur Ermittlung des Druckverteilungsverhältnisstartwerts berücksichtigt. Daraus ergibt sich die folgende Gleichung, bei der die Beschleunigung mit dem Formelzeichen "a" bezeichnet ist:

$$(P_{FA}/P_{RA}) = ((a_{RA}-a_{Veh}) / (a_{FA}-a_{Veh})) * (P_{FA}/P_{RA})_{nonideal}$$

Steht der Bremssteuereinheit kein Signal über die Fahrzeuggeschwindigkeit zur Verfügung, wird der Messwert eines Längsbeschleunigungssensors für die Ermittlung des Druckverteilungsverhältnisstartwerts herangezogen. Sollten auch Informationen über die Längsbeschleunigung nicht verfügbar sein, wird die Fahrzeuggeschwindigkeit als Referenzwert aus den einzelnen Drehzahlmesswerten der Räder hergeleitet, beispielsweise wird der höchste Geschwindigkeitswert der erfassten Räder während eines Bremsvorgangs in Bezug genommen als Referenzwert zur Ermittlung von Schlupfwerten.

In einer vorteilhaften Ausführungsform einer Bremsanlage sind die Drucksteuerventile in einem oder mehreren Bremskreisen angeordnet, welche über jeweils ein Aktivierungsventil mit einem Druckmittelvorrat verbindbar sind, wobei jedes Aktivierungsventil elektrisch an die Bremssteuereinheit angeschlossen und durch die Bremssteuereinheit schaltbar ist. Zum Wechsel des Bremsmodus, also einem Wechsel vom Normalbremsmodus zum Drucksteuermodus und umgekehrt, wechselt die Bremssteuereinheit die Ventilstellung des Aktivierungsventils. Im Drucksteuermodus schaltet die Bremssteuereinheit über das Aktivierungsventil des betreffenden Bremskreises eine fluidische pneumatische Verbindung zwischen Drucksteuerventil und Druckmittelvorrat frei, so dass der Bremsdruck der Radbremsen über das jeweilige Drucksteuerventil einstellbar ist. Vorteilhaft sind die Drucksteuerventile der Räder einer Achse des Kraftfahrzeugs über einen gemeinsamen Bremskreis mit einem Aktivierungsventil dieses Bremskreises mit einem Druckmittelvorrat verbunden.

Die Aktivierungsventile sind vorteilhaft als 3/2-Wege-Ventile ausgebildet, beispielsweise Magnetventile, wobei das Drucksteuerventil an den Arbeitsanschluss des Aktivierungsventils angeschlossen ist und in einer ersten Ventilstellung mit dem Betriebsbremsventil verbunden ist. Diese erste Ventilstellung ist für den Normalbremsmodus vorgesehen. Zur Aktivierung des Drucksteuermodus, also zur Umsetzung einer Fahrstabilitätsfunktion und/oder einer externen Bremsanforderung, wird das Aktivierungsventil in die zweite Ventilstellung geschaltet und der Bremsmittelvorrat unmittelbar zum Drucksteuerventil durchgeschaltet.

Ausführungsbeispiele der Erfindung sind nachstehend anhand der Zeichnung näher erläutert. Es zeigen:

Fig. 1    ein pneumatisches und elektrisches Schema einer Bremsanlage eines Nutzfahrzeugs,
Fig. 2    ein Flussschaubild eines Ausführungsbeispiels eines Verfahrens zum Einstellen der Bremsdrücke in einer Bremsanlage gemäß Fig. 1.

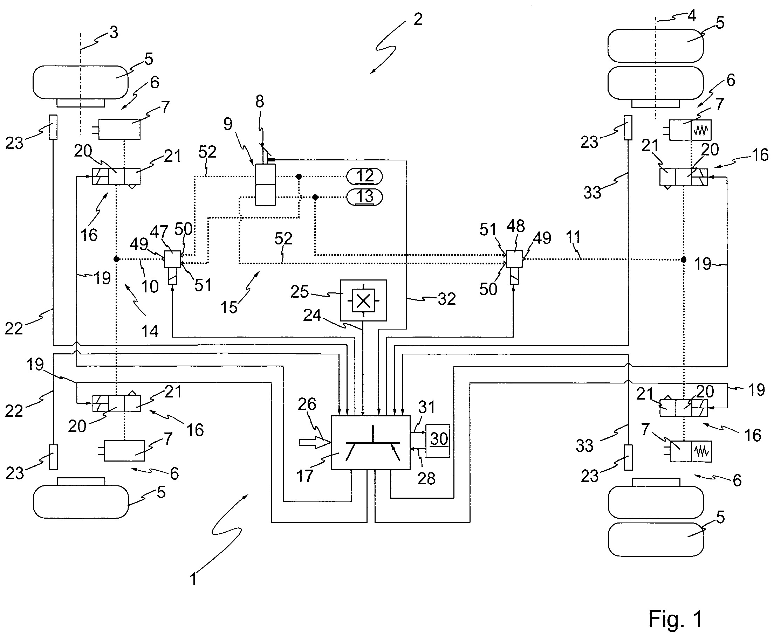

Fig. 1 zeigt ein elektrisch-pneumatisches Schema einer pneumatischen Bremsanlage 1 eines Kraftfahrzeugs 2, nämlich eines Nutzfahrzeugs. Elektrische Leitungen sind mit Volllinien und pneumatische Leitungen mit punktierten Linien dargestellt. Das Kraftfahrzeug 2 umfasst im gezeigten Ausführungsbeispiel zwei Achsen, nämlich eine in Fahrtrichtung vorn liegende Vorderachse 3 und eine Hinterachse 4, an denen jeweils beidseitig Räder 5 angeordnet sind. Zum Abbremsen des Kraftfahrzeugs 2 ist jedem Rad 5 eine Radbremse 6 zugeordnet. Die Radbremsen 6 sind pneumatisch betätigbar und weisen jeweils einen Bremszylinder 7 auf. Die Radbremsen 6 üben entsprechend dem jeweils im Bremszylinder 7 wirkenden pneumatischen Bremsdruck eine Bremskraft auf das sich drehende Rad 5 aus.

In der Fahrerkabine des Kraftfahrzeugs 2 ist ein Bremspedal 8 angeordnet, welches an ein Betriebsbremsventil 9 gekoppelt ist. Der Fahrer des Kraftfahrzeugs 2 schaltet durch betätigen des Bremspedals 8 pneumatischen Druck zu den Bremszylindern 7 durch und betätigt somit die Radbremsen 6. Hierzu beherrscht das Betriebsbremsventil 9 pneumatische Bremsleitungen 10, 11 zwischen den Druckmittelvorräten 12, 13 und den Bremszylindern 7.

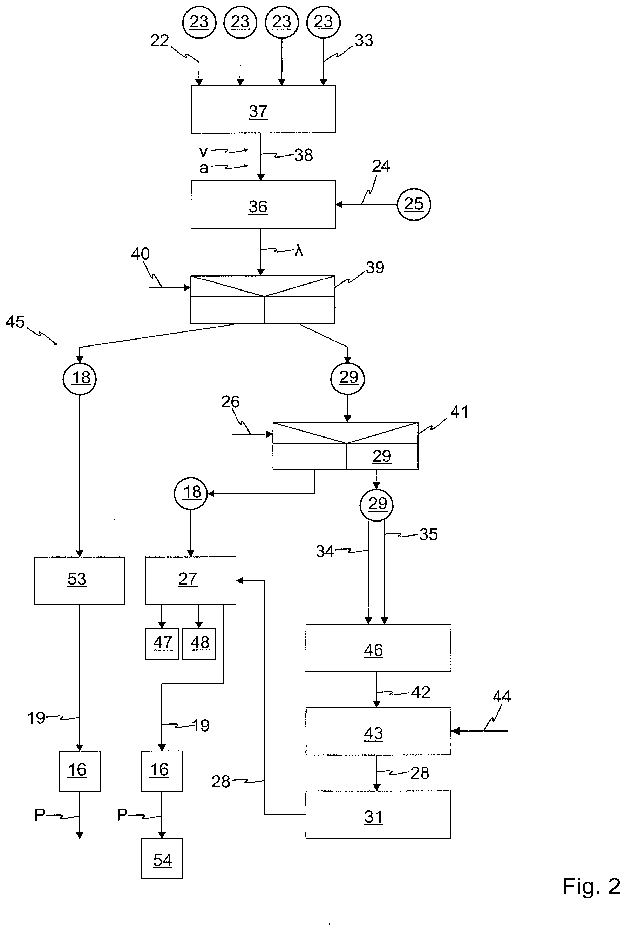

Die Bremsanlage 1 weist im gezeigten Ausführungsbeispiel zwei Bremskreise auf, wobei ein erster Bremskreis 14 der Vorderachse 3 zugeordnet ist und ein zweiter Bremskreis 15 der Hinterachse 4 zugeordnet ist. Die Bremszylinder 7 der Räder 5 der Vorderachse 3 sind daher über die Bremsleitung 10 mit dem Druckmittelvorrat 12 des ersten Bremskreises 14 verbunden. Die Bremszylinder 7 der Radbremsen 6 der Hinterachse 4 sind über die Bremsleitung 11 mit dem Druckmittelvorrat 13 des zweiten Bremskreises 15 verbunden. Der Bremsdruck in den Bremszylindern 7 ist daher in einem Normalbremsmodus (Bezugszeichen 29 in Fig. 2) Abhängigkeit der Stellung des Bremspedals 8, das heißt in Abhängigkeit einer Fahrerbremsanforderung 32 einstellbar.

Jeder Radbremse 6 der Bremsanlage 1 ist ein Drucksteuerventil 16 zugeordnet, welche von einer Bremssteuereinheit 17 in einem Drucksteuermodus (Bezugszeichen 18 in Fig. 2) elektrisch angesteuert werden. Die Drucksteuerventile 16 sind zum Empfang von Steuersignalen 19 mit der Bremssteuereinheit 17 signalübertragend verbunden. Die Drucksteuerventile 16 sind jeweils eine Kombination von zwei Magnetventilen, nämlich einem Einlassventil 20 und einem Auslassventil 21. Das Einlassventil 20 dient dabei prinzipiell zur Druckerhöhung, beziehungsweise zum Halten des Drucks im Bremszylinder 7, während das Auslassventil 21 zur Reduzierung des Bremsdrucks geöffnet wird und den jeweils angeschlossenen Bremszylinder 7 entlüftet.

Im Drucksteuermodus 18 übernimmt die Bremssteuereinheit 17 die Einstellung des Bremsdrucks der jeweiligen Radbremsen 6 durch entsprechende Ansteuerung der Drucksteuerventile 16. Jedem Bremskreis 14, 15 ist ein elektrisch betätigbares Aktivierungsventil 47, 48 zugeordnet, welche von der Bremssteuereinheit 17 betätigbar sind. Jedes Aktivierungsventil 47, 48 ist als 3/2-Wege-Magnetventil ausgebildet, das heißt, es weist drei Anschlüsse 49, 50, 51 und zwei Schaltstellungen auf. Dabei ist der Versorgungsanschluss 49 des jeweiligen Aktivierungsventils 47, 48 jeweils der Bremsleitung 10, 11 zugeordnet, welche entsprechend der Schaltstellung des Aktivierungsventils 47, 48 alternativ mit einem der beiden Versorgungsanschlüsse 50, 51 verbunden ist.

Das erste Aktivierungsventil 47 des ersten Bremskreises 14 beherrscht somit die Versorgung der Bremsleitung 10 und das zweite Aktivierungsventil 48 des zweiten Bremskreises 15 die Bremsleitung 11. An einen ersten Versorgungsanschluss 50 der Aktivierungsventile 47, 48 ist jeweils eine Druckleitung 52 zum Betriebsbremsventil 9 angeschlossen. Der zweite Versorgungsanschluss 51 ist mit dem Druckmittelvorrat 12, 13 des jeweiligen Bremskreises 14, 15 verbunden. Im Normalbremsmodus verbindet das Aktivierungsventil 47, 48 die Bremsleitung 10, 11 mit dem Betriebsbremsventil 9, so dass der Bremsdruck über das Betriebsbremsventil 9 einstellbar ist. Im Drucksteuermodus 18 kann die Bremssteuereinheit 17 durch Änderung der Schaltstellung des Aktivierungsventils 47, 48 die Bremsleitung 10, 11 unmittelbar mit dem jeweiligen Druckmittelvorrat 12, 13 verbinden.

Die Bremssteuereinheit 17 ist dazu ausgebildet und konfiguriert, zur Umsetzung von Fahrstabilitätsfunktionen und/oder externen Bremsanforderungen die Einstellung der Bremsdrücke im Drucksteuermodus 18 zu übernehmen. Die Bremssteuereinheit 17 empfängt laufend Drehzahlmesswerte 22, 33 von Drehzahlsensoren 23 der Räder 5 des Kraftfahrzeugs 2. Jedem Rad 5 des Kraftfahrzeugs 2 ist dabei ein Drehzahlsensor 23 zugeordnet, sodass der Bremssteuereinheit 17 stets ein Drehzahlmesswert 22, 33 jedes Rades 5 zur Verfügung steht. Die Bremssteuereinheit 17 ist neben den Drehzahlsensoren 23 und den Drucksteuerventilen 16 wesentlicher Bestandteil eines Antiblockiersystems der Bremsanlage 1 und setzt dessen Fahrstabilitätsfunktion 45, nämlich eine Antiblockierfunktion, um. Sie überwacht über die Drehzahlmesswerte 22, 33 die Blockierneigung der jeweiligen Räder 5.

Durch Auswertung der Drehzahlmesswerte 22, 33 schließt die Bremssteuereinheit 17 auf die Blockierneigung des jeweiligen Rades 5. Übersteigt nämlich die eingesteuerte Bremskraft die maximal übertragbare Bremskraft an einem oder mehreren Rädern, beginnen diese zu blockieren, wodurch das Kraftfahrzeug 2 instabil werden kann. Über die Drehzahlsensoren 23 überwacht die Antiblockierfunktion der Bremssteuereinheit 17 die Drehzahl jedes Rades 5. Dabei wird eine aus den Drehzahlmesswerten 22, 33 ermittelte Bewegungsgröße Bezugszeichen 38 in Fig. 2), beispielsweise die Radgeschwindigkeit, mit einem errechneten oder gemessenen Referenzwert 24 der entsprechenden Bewegungsgröße des Kraftfahrzeugs 2 zum jeweils gleichen Messzeitpunkt verglichen. Wird über den so ermittelten Radschlupf eine Blockierneigung des Rades 5 erkannt, das heißt eine vorgegebene Schlupfgrenze ist erreicht oder überschritten, übernimmt die Bremssteuereinheit17 die Kontrolle über die Einstellung des Bremsdrucks im Drucksteuermodus 18. Dabei erfolgt in einem ersten Schritt eine Senkung des Bremsdrucks, um anschließend den Bremsdruck des betreffenden Rades 5 entlang der Schlupfgrenze zu regeln. Sollte eine geeignete Bewegungsgröße des Kraftfahrzeugs 2 von anderen Modulen der Bremsanlage 1 bekannt sein, so wird die entsprechende Information der Bremssteuereinheit 17 als Referenzwert 24 zur Schlupfermittlung vorgegeben. Im gezeigten Ausführungsbeispiel ist an dem Kraftfahrzeug 2 ein Längsbeschleunigungssensor 25 angeordnet, aus dessen Messsignalen die Bremssteuereinheit 17 die gewünschten Referenzwerte 24 herleitet.

Die Bremssteuereinheit 17 ist dazu ausgebildet, externe Bremsanforderungen 26 von Fahrerassistenzsystemen des Kraftfahrzeugs 2 zu empfangen. Liegen externe Bremsanforderungen 26 vor, so übernimmt die Bremssteuereinheit 17 die Einstellung der Bremsdrücke. Hierzu bringt die Bremssteuereinheit 17 die Aktivierungsventile 47, 48 in die für den Drucksteuermodus 18 vorgesehene Schaltstellung (also direkte Durchschaltung des Druckmittelvorrats) und führt den Drucksteuerventilen 16 der jeweiligen Radbremsen 6 Steuersignale 19 zur Umsetzung der externen Bremsanforderung 26 zu.

Im Drucksteuermodus 18 (Fig. 2) stellt die Bremssteuereinheit 17 wenigstens bei der Umsetzung externer Bremsanforderungen 26 die Bremsdrücke unter Regelung eines idealen Druckverteilungsverhältnisses der Bremsdrücke an den Radbremsen 6 der Vorderachse 3 zu den Bremsdrücken an den Radbremsen 6 der Hinterachse 4 des Kraftfahrzeugs 2 ein. Als ideales Druckverteilungsverhältnis wird dabei das Verhältnis der Bremsdrücke der Vorderachse 3 zu den Bremsdrücken der Hinterachse 4 angenommen, bei denen an den Rädern 5 gleicher Radschlupf ermittelt wird. Dies erfolgt vorteilhaft durch Überwachung eines Differenzschlupfs als Differenz des Radschlupfs der beiden betrachteten Achsen.

Durch die Regelung des Druckverteilungsverhältnisses wird einem unerwünschten Eingreifen der Antiblockierfunktion vorgebeugt, welche solange ausgeschlossen ist oder so spät erfolgt, wie es aufgrund der gegebenen physikalischen Bedingungen tatsächlich möglich ist. Sämtliche Räder 5 des Kraftfahrzeugs 2 blockieren gleichzeitig oder nahezu gleichzeitig.

Die Regelung 27 (Fig. 2), deren Stellgröße der Bremsdruck über Variation der Steuersignale 19 für die Drucksteuerventile 16 ist, berücksichtigt einen Druckverteilungsverhältnisstartwert 28 des Druckverteilungsverhältnisses, welcher im Normalbremsmodus 29 (Fig. 2) ermittelt wird und für die spätere Berücksichtigung im Drucksteuermodus 18 bereitgehalten wird. Die Ermittlung dieses Druckverteilungsverhältnisstartwerts 28 für die Regelung 27 ist nachstehend anhand von Fig. 2 näher erläutert. Der Bremssteuereinheit 17 ist ein Speicherelement 30 zur Abspeicherung 31 des im Normalbremsmodus 29 ermittelten Druckverteilungsverhältnisses zugeordnet, welches als Druckverteilungsverhältnisstartwert 28 für die Regelung 27 bei Beginn des Drucksteuermodus 18 ausgelesen wird.

Fig. 2 zeigt in einem Flussschaubild ein Ausführungsbeispiel zur Ermittlung eines Druckverteilungsverhältnisstartwerts 28 für eine Regelung 27 des Druckverteilungsverhältnisses 54 der Bremsdrücke P zwischen der Vorderachse (Bezugszeichen 3 in Fig. 1) und der Hinterachse (Bezugszeichen 4 in Fig. 1). Im Drucksteuermodus 18 erzeugt die Bremssteuereinheit Steuersignale 19 für die Drucksteuerventile (Bezugszeichen 16 in Fig. 1) unter Regelung 27 eines idealen Druckverteilungsverhältnisses 54 der Bremsdrücke P an den Radbremsen der Vorderachse zu den Bremsdrücken P an den Radbremsen der Hinterachse. Der Bremsdruck P wird dabei von der Regelung 27 über eine entsprechende Ansteuerung der Drucksteuerventile mit Steuersignalen 19 beeinflusst. Alternativ zum Drucksteuermodus 28 werden die Bremsdrücke P an den Radbremsen im Normalbremsmodus 29 in Abhängigkeit einer vom Fahrer des Kraftfahrzeugs bestimmten Fahrerbremsanforderung (Bezugszeichen 32 in Fig. 1) eingestellt. Im Normalbremsmodus 29 hat somit der Fahrer des Kraftfahrzeugs die volle Kontrolle über die Einstellung des Bremsdrucks, wobei die Bremssteuereinheit nicht aktiv in die Einstellung des Bremsdrucks eingreift, sondern passiv die Voraussetzungen des Eingreifens zur Umsetzung von Fahrstabilitätsfunktionen 45 überwacht.

Eine derartige Fahrstabilitätsfunktion 45 ist diejenige des Antiblockiersystems (Fig. 1), wobei die Blockierneigung der Räder überwacht wird. Die Drehzahlmesswerte 22, 33 der Drehzahlsensoren 23 an den Rädern werden mit einem Referenzwert 24 einer Bewegungsgröße des Kraftfahrzeugs zum jeweils gleichen Messzeitpunkt in einer den Radschlupf repräsentierenden Weise verknüpft und Schlupfwerte für jedes Rad ermittelt, nämlich in dem Ausführungsbeispiel gemäß Fig. 2 der Radschlupf λ. Zur Verknüpfung 36 mit dem Referenzwert 24 werden in einer Auswertung 37 der Drehzahlmesswerte 22, 33 Bewegungsgrößen 38 ermittelt, welche der als Referenzwert 24 ausgewerteten Bewegungsgröße des Kraftfahrzeugs entsprechen.

Im Ausführungsbeispiel gemäß Fig. 2 wird die Geschwindigkeit v als Bewegungsgröße 38 berücksichtigt, wobei die Ermittlung des Radschlupfs λ gemäß der folgenden Formel erfolgt:

$$\lambda = (v - v_{Veh})/v_{Veh}$$

Anstelle der Geschwindigkeit v kann alternativ die Beschleunigung a als Bewegungsgröße 38 berücksichtigt werden.

Im Ausführungsbeispiel gemäß Fig. 2 stellt die Bremssteuereinheit 17 den Bremsdruck zur Umsetzung externer Bremsanforderungen 26 unter Regelung 27 des Bremsdruckverhältnisses 54 ein. Im Drucksteuermodus 18 zur Umsetzung der Fahrstabilitätsfunktion 45 des Antiblockiersystems erfolgt eine Regelung 53 des Bremsdrucks P über die Drucksteuerventile 16 ohne Berücksichtigung des Bremsdruckverhältnisses. In weiteren, nicht dargestellten Ausführungsbeispielen ist auch eine Berücksichtigung des Druckverteilungsverhältnisses bei Antiblockiereingriffen vorgesehen.

Der Radschlupf λ des jeweiligen Rades wird in einem Vergleichsschritt 39 mit einem vorgegebenen Schwellwert 40 verglichen. Das Überschreiten des Schwellwerts 40 signalisiert dabei eine Blockierneigung des betreffenden Rades. Überschreitet der Radschlupf λ eines oder mehrerer Räder den vorgegebenen Schwellwert 40, so erfolgt ein Bremsmoduswechsel und die Bremssteuereinheit 17 übernimmt die Einstellung der Bremsdrücke im Drucksteuermodus 18. Dadurch wird die Fahrstabilitätsfunktion 45 des Antiblockiersystems umgesetzt. Überschreitet keiner der ermittelten Werte des Radschlupfs λ den vorgegebenen Schwellwert 40, so bleibt die Bremssteuereinheit 17 im Normalbremsmodus 29 und passiver Überwachung der Fahrstabilität durch Vergleich des Radschlupfs λ mit dem Schwellwert 40.

In einem Erfassungsschritt 41 erfasst die Bremssteuereinheit das Vorliegen einer externen Bremsanforderung 26. Liegt eine externe Bremsanforderung 26 vor, so erfolgt ein Bremsmoduswechsel und die Bremsanlage wechselt in den Drucksteuermodus 18, in welchem die Bremssteuereinheit 17 die Einstellung der Bremsdrücke P übernimmt.

Wechselt die Bremssteuereinheit 17 zur Umsetzung einer externen Bremsanforderung 26 in den Drucksteuermodus 18, so steuert die Bremssteuereinheit 17 die Aktivierungsventile 47, 48 (Fig. 1) an und leitet dadurch die aktive Veränderung der Bremsdrücke P und Regelung 27 des idealen Druckverteilungsverhältnisses 54 im Drucksteuermodus 18 ein. Durch die Umschaltung der Aktivierungsventile 47, 48 stehen die Drucksteuerventile 16 mit den Druckmittelvorräten 12, 13 in Verbindung, so dass der Bremsdruck P an den Radbremsen 6 über die Drucksteuerventile 16 mittels dessen Einlassventil 20 oder Auslassventilen 21 einstellbar ist.

Im Normalbremsmodus 29 wird ein Druckverteilungsverhältnisstartwert 28 für die Regelung 27 ermittelt, welcher durch Speicherung für eine spätere Berücksichtigung im Drucksteuermodus 18 bereitgehalten wird. Hiervon wird aus den Werten des Radschlupfs λ, welche während der Überwachung der Blockierneigung, beispielsweise durch die Fahrstabiltätsfunktion 45 des Antiblockiersystems, ermittelt werden, ein erster Schlupfwert 34 für die Vorderachse und ein zweiter Schlupfwert 35 für die Hinterachse herangezogen. Der erste Schlupfwert 34 für die Vorderachse kann einer der beiden zur Verfügung stehenden Werte des Radschlupfs $\lambda$ sein oder ein Mittelwert der beiden Schlupfwerte für die Räder der Vorderachse sein. Entsprechend ist der zweite Schlupfwert 35 für die Hinterachse einer der beiden für die Antiblockierfunktion ermittelten Radschlüpfen $\lambda$ oder ein Mittelwert aus beiden Werten.

Der erste Schlupfwert 34 und der zweite Schlupfwert 35 für das betrachtete Paar von Vorderachse und Hinterachse werden ins Verhältnis zueinander gesetzt 46 und so ein Verteilungsindex 42 bestimmt. Der Verteilungsindex 42 ist ein Faktor, welcher in einer Verknüpfung 43 mit einem vorgegebenen Druckverteilungsverhältnis 44 den Druckverteilungsverhältnisstartwert 28 für die Regelung 27 des Druckverteilungsverhältnisses im Drucksteuermodus 18 ergibt. Das vorgegebene Druckverteilungsverhältnis 44 kann ein fester Vorgabewert sein, oder wird im Falle eines EBS dynamisch ermittelt.

Der Verteilungsindex 42 korrespondiert mit dem Beladungszustand des Kraftfahrzeugs, so dass durch die Verknüpfung 43 mit dem vorgegebenen Wert des Druckverteilungsverhältnisses 44 ein tatsächliches Druckverteilungsverhältnis ermittelbar ist, welches erheblich näher am idealen Druckverteilungsverhältnis 54 des Kraftfahrzeugs 2 in der aktuellen Beladungssituation liegt.

Zur Bestimmung des Verteilungsindex 42 werden die ersten Schlupfwerte 34 für die Vorderachse und die zweiten Schlupfwerte 35 für die Hinterachse reziprok zum Bezug auf die jeweiligen Druckverhältnisse berücksichtigt. Dies entspricht der Annahme, dass im idealen Druckverteilungsverhältnis die Schlupfwerte 34, 35 der betrachteten Achsen des Kraftfahrzeugs 2 gleich sind, beziehungsweise kein Differenzschlupf gegeben ist.

Die Ermittlung des Druckverteilungsverhältnisstartwerts 28, welcher dem Beginn der Regelung 27, nach der Umschaltung in den Drucksteuermodus 18 zugrunde gelegt wird, wird vorteilhaft während des Normalbremsmodus 29 während vergleichsweise schwachen Fahrzeugverzögerungen, das heißt negativen Beschleunigungen von beispielsweise -1m/s$^2$ bis -1,5m/s$^2$ ermittelt, um dynamische Einflüsse zu verringern.

Die Einstellung des Bremsdrucks P in einem Drucksteuermodus 18 mit einer Regelung 27 unter Berücksichtigung eines im Normalbremsmodus 29 ermittelten Druckverteilungsverhältnisstartwerts 28 kann auch bei Kraftfahrzeugen mit mehreren Achsen verwendet werden. Es ist außerdem verwendbar sowohl bei konventionellen Bremssystemen mit Antiblockiersystem (ABS) als auch bei elektronischen Bremssystemen (EBS).

Bezugszeichenliste (Bestandteil der Beschreibung)

1. Bremsanlage
2. Kraftfahrzeug
3. Vorderachse
4. Hinterachse
5. Rad
6. Radbremse
7. Bremszylinder
8. Bremspedal
9. Betriebsbremsventil
10. Bremsleitung
11. Bremsleitung
12. Druckmittelvorrat
13. Druckmittelvorrat
14. Erster Bremskreis
15. Zweiter Bremskreis
16. Drucksteuerventil
17. Bremssteuereinheit
18. Drucksteuermodus
19. Steuersignal
20. Einlassventil
21. Auslassventil
22. Erste Drehzahlmesswerte
23. Drehzahlsensor
24. Referenzwert
25. Längsbeschleunigungssensor
26. Externe Bremsanforderung
27. Regelung

28. Druckverteilungsverhältnisstartwert
29. Normalbremsmodus
30. Speicherelement
31. Abspeicherung
32. Fahrerbremsanforderung
33. Zweite Drehzahlmesswerte
34. Erster Schlupfwert
35. Zweiter Schlupfwert
36. Verknüpfung
37. Auswertung
38. Bewegungsgröße
39. Vergleichsschritt
40. Schwellwert
41. Erfassungsschritt
42. Verteilungsindex
43. Verknüpfen
44. Vorgegebenes Druckverteilungsverhältnis
45. Fahrstabilitätsfunktion
46. Ins Verhältnis setzen
47. Aktivierungsventil
48. Aktivierungsventil
49. Arbeitsanschluss
50. Erster Versorgungsanschluss
51. Zweiter Versorgungsanschluss
52. Druckleitung
53. Regelung
54. Ideales Druckverteilungsverhältnis
P   Bremsdruck
$\lambda$   Radschlupf
v   Geschwindigkeit
a   Beschleunigung

**Patentansprüche**

1. Verfahren zum Einstellen von Bremsdrücken (P) an Radbremsen (6) eines Kraftfahrzeugs (2), wobei ein Bremsdruck (P) an den Radbremsen (6) in einem Normalbremsmodus (29) in Abhängigkeit einer vom Fahrer des Kraftfahrzeugs (2) bestimmten Fahrerbremsanforderung (32) eingestellt wird, und wobei eine Bremssteuereinheit (17) zur Umsetzung wenigstens einer Fahrstabilitätsfunktion (45) und/oder externer Bremsanforderungen (26) die Einstellung der Bremsdrücke (P) der betreffenden Radbremse (6) in einem Drucksteuermodus (18) übernimmt und die Bremsdrücke (P) wenigstens bei der Umsetzung externer Bremsanforderungen (26) unter Regelung (27) eines idealen Druckverteilungsverhältnisses (54) der Bremsdrücke (P) an den Radbremsen (6) der Vorderachse (3) zu den Bremsdrücken (P) an den Radbremsen (6) an einer Hinterachse (4) des Kraftfahrzeugs (2) bestimmt, wobei die Regelung (27) einen Druckverteilungsverhältnisstartwert (28) berücksichtigt, welcher im Normalbremsmodus (29) ermittelt und für die spätere Berücksichtigung im Drucksteuermodus (18) abgespeichert (31) und bereitgehalten wird, wobei der Druckverteilungsverhältnisstartwert (28) im Normalbremsmodus (29) ermittelt wird, indem

    - ein erster Drehzahlmesswert (22) der Vorderachse (3) und ein zweiter Drehzahlmesswert (33) der Hinterachse (4) erfasst sowie ein Referenzwert (24) einer Bewegungsgröße (38) des Kraftfahrzeugs (2) ermittelt wird,
    - der Drehzahlmesswert (22) der Vorderachse (3) und der Drehzahlmesswert (33) der Hinterachse (4) jeweils mit dem Referenzwert (24) in einer den Radschlupf ($\lambda$) an der jeweiligen Achse (3, 4) repräsentierenden Weise verknüpft werden, die so gebildeten ersten Schlupfwerte (34) bezüglich der Vorderachse (3) und die zweiten Schlupfwerte (35) bezüglich der Hinterachse (4) in ein Verhältnis zueinander gesetzt (46) werden und

der so bestimmte Verteilungsindex (42) mit einem vorgegebenen Druckverteilungsverhältnis (44) verknüpft (43) wird, wobei der Druckverteilungsverhältnisstartwert (28) nach folgender Gleichung bestimmt wird: $(P_{FA}/P_{RA}) = (\lambda_{RA}/\lambda_{FA}) * (P_{FA}/P_{RA})_{nonideal}$, wobei der Index "FA" in der Gleichung für eine der Vorderachse zugeordnete Druck- und/oder Schlupfgröße und der Index "RA" in der Gleichung für eine der Hinterachse zugeordnete Druck- und/oder

EP 3 500 461 B1

Schlupfgröße steht, und $(P_{FA}/P_{RA})_{nonideal}$ ein vorgegebenes Druckverteilungsverhältnis darstellt, welches im Falle eines elektronischen Bremssystems (EBS) dynamisch ermittelt wird.

2. Verfahren nach Anspruch 1,
**dadurch gekennzeichnet, dass**
zur Bestimmung der Schlupfwerte (34, 35) aus dem ersten Drehzahlmesswert (22) der Vorderachse (3) und dem zweiten Drehzahlmesswert (33) der Hinterachse (4) eine der Bewegungsgröße (38) des Kraftfahrzeugs (2) entsprechende Bewegungsgröße (38) bestimmt und mit dem Referenzwert (24) verknüpft (36) wird.

3. Verfahren nach einem der vorhergehenden Ansprüche,
**gekennzeichnet durch**
die Berücksichtigung der Geschwindigkeit (v) als Bewegungsgröße (38).

4. Verfahren nach einem der Ansprüche 1 bis 2,
**gekennzeichnet durch**
die Berücksichtigung der Beschleunigung (a) als Bewegungsgröße (38).

5. Verfahren nach einem der vorhergehenden Ansprüche,
**dadurch gekennzeichnet, dass**
die Ermittlung des Druckverteilungsverhältnisstartwerts (28) für die Regelung (27) während Bremsungen im Normalbremsmodus (29) mit Beschleunigungen (a) zwischen -1m/s$^2$ bis -1,5m/s$^2$ erfolgt.

6. Bremsanlage (1) eines Kraftfahrzeugs (2) zur Durchführung des Verfahrens nach einem der Ansprüche 1 bis 5, mit pro Rad (5) einem Bremszylinder (7) und einem Drucksteuerventil (16) sowie pro Bremskreis (14, 15) einem Aktivierungsventil (47, 48), welche zum Empfang von Steuersignalen (19) während eines Drucksteuermodus (18) mit einer Bremssteuereinheit (17) signalübertragend verbunden sind, sowie mit einem vom Fahrer des Kraftfahrzeugs (2) betätigbaren Betriebsbremsventils (9), wobei die Bremsdrücke (P) in den Bremszylindern (7) in einen Normalbremsmodus (29) durch Betätigung des Betriebsbremsventils (9) entsprechend der Fahrerbremsanforderung (32) und in einem Drucksteuermodus (18) über die jeweiligen Aktivierungsventile (47, 48) und das jeweilige Drucksteuerventil (16) von der Bremssteuereinheit (17) einstellbar sind, wobei die Bremssteuereinheit (17)

- zur Umsetzung von Fahrstabilitätsfunktionen (45) und/oder externen Bremsanforderungen (26) im Drucksteuermodus (18) ausgebildet ist,
- zur Auswertung von Drehzahlmesswerten (22, 33) mit Drehzahlsensoren (23) der Räder (5) verbunden ist,
- zur Regelung (27) eines idealen Druckverteilungsverhältnisses (54) des Bremsdrucks (P) an der Vorderachse (3) zu dem Bremsdruck (P) an einer Hinterachse (4) während des Drucksteuermodus (18) und
- zur Ermittlung eines Druckverteilungsverhältnisstartwerts (28) für die Regelung (27) unter Heranziehung der Drehzahlmesswerte (22, 33) während des Normalbremsmodus (29) ausgebildet ist,

  ◦ wobei der Druckverteilungsverhältnisstartwert (28) im Normalbremsmodus (29) ermittelt wird, indem
  ◦ ein erster Drehzahlmesswert (22) der Vorderachse (3) und ein zweiter Drehzahlmesswert (33) der Hinterachse (4) erfasst sowie ein Referenzwert (24) einer Bewegungsgröße (38) des Kraftfahrzeugs (2) ermittelt wird,
  ◦ der Drehzahlmesswert (22) der Vorderachse (3) und der Drehzahlmesswert (33) der Hinterachse (4) jeweils mit dem Referenzwert (24) in einer den Radschlupf ($\lambda$) an der jeweiligen Achse (3, 4) repräsentierenden Weise verknüpft werden, die so gebildeten ersten Schlupfwerte (34) bezüglich der Vorderachse (3) und die zweiten Schlupfwerte (35) bezüglich der Hinterachse (4) in ein Verhältnis zueinander gesetzt (46) werden und
  ◦ der so bestimmte Verteilungsindex (42) mit einem vorgegebenen Druckverteilungsverhältnis (44) verknüpft (43) wird, wobei der Druckverteilungsverhältnisstartwert (28) nach folgender Gleichung bestimmt wird: $(P_{FA}/P_{RA}) = (\lambda_{RA}/\lambda_{FA}) * (P_{FA}/P_{RA})_{nonideal}$, wobei der Index "FA" in der Gleichung für eine der Vorderachse zugeordnete Druck- und/oder Schlupfgröße und der Index "RA" in der Gleichung für eine der Hinterachse zugeordnete Druck- und/oder Schlupfgröße steht, und $(P_{FA}/P_{RA})_{nonideal}$ ein vorgegebenes Druckverteilungsverhältnis darstellt, welches im Falle eines elektronischen Bremssystems (EBS) dynamisch ermittelt wird, und

- ein Speicherelement (30) zur Abspeicherung (31) des Druckverteilungsverhältnisstartwerts (28) für die Regelung (27) des idealen Druckverteilungsverhältnisses (54) aufweist.

**7.** Bremsanlage nach Anspruch 6,
**dadurch gekennzeichnet, dass**
die Drucksteuerventile (16) in einem oder mehreren Bremskreisen (14, 15) angeordnet sind, welche über jeweils ein Aktivierungsventil (47, 48) mit einem Druckmittelvorrat (12, 13) verbindbar sind, wobei jedes Aktivierungsventil (47, 48) elektrisch an die Bremssteuereinheit (17) angeschlossen und durch die Bremssteuereinheit (17) schaltbar ist, wobei die Drucksteuerventile (16) der Räder (5) einer Achse (3, 4) des Kraftfahrzeugs (2) über einen gemeinsamen Bremskreis (14, 15) mit einem Aktivierungsventil (47, 48) mit einem Druckmittelvorrat (12, 13) verbunden sind.

**8.** Kraftfahrzeug mit einer Bremsanlage (1) nach Anspruch 6 oder 7.

## Claims

**1.** A method for adjusting brake pressures (P) on wheel brakes (6) of a motor vehicle (2), wherein a brake pressure (P) at the wheel brakes (6) in a normal braking mode (29) is adjusted as a function of a driver braking request (32) determined by the driver of the motor vehicle (2), and wherein a brake control unit (17), for implementing at least one driving stability function (45) and/or external braking requests (26), takes over the adjustment of the brake pressures (P) of the relevant wheel brake (6) in a pressure control mode (18), and, at least during implementation of external braking requests (26), determines the brake pressures (P) with control (27) of an ideal pressure distribution ratio (54) of the brake pressures (P) at the wheel brakes (6) of the front axle (3) to the brake pressures (P) at the wheel brakes (6) of a rear axle (4) of the motor vehicle (2), wherein the control (27) takes into account a pressure distribution ratio starting value (28) which is determined in the normal braking mode (29) and is stored (31) and kept available for later consideration in the pressure control mode (18), wherein the pressure distribution ratio starting value (28) is determined in the normal braking mode (29), in that

- a first rotational speed measurement value (22) of the front axle (3) and a second rotational speed measurement value (33) of the rear axle (4) are detected, and a reference value (24) of a movement variable (38) of the motor vehicle (2) is determined,
- the rotational speed measurement value (22) of the front axle (3) and the rotational speed measurement value (33) of the rear axle (4) are each linked to the reference value (24) in a manner representing the wheel slip ($\lambda$) at the corresponding axle (3, 4), the first slip values (34) formed in this way with respect to the front axle (3) and the second slip values (35) with respect to the rear axle (4) are set (46) in a ratio to one another, and

the distribution index (42) determined in this way is linked (43) to a predefined pressure distribution ratio (44), wherein the pressure distribution ratio starting value (28) is determined according to the following equation: $(P_{FA}/P_{RA}) = (\lambda_{RA}/\lambda_{FA}) * (P_{FA}/P_{RA})_{nonideal}$, where the index "FA" in the equation represents a pressure and/or slip variable associated with the front axle and the index "RA" in the equation represents a pressure and/or slip variable associated with the rear axle, and $(P_{FA}/P_{RA})_{nonideal}$ represents a predefined pressure distribution ratio which is dynamically determined in the case of an electronic braking system (EBS).

**2.** The method according to claim 1,
**characterized in that,**
in order to determine the slip values (34, 35), a movement variable (38) corresponding to the movement variable (38) of the motor vehicle (2) is determined from the first rotational speed measurement value (22) of the front axle (3) and the second rotational speed measurement value (33) of the rear axle (4) and is linked (36) to the reference value (24).

**3.** The method according to either of the preceding claims,
**characterized by**
taking into account the speed (v) as a movement variable (38).

**4.** The method according to either of claims 1 to 2,
**characterized by**
taking into account the acceleration (a) as a movement variable (38).

**5.** The method according to any of the preceding claims,
**characterized in that**
the determination of the pressure distribution ratio starting value (28) for the control (27) takes place during braking in the normal breaking mode (29) with accelerations (a) between -1 m/s$^2$ to -1.5 m/s$^2$.

6. A brake system (1) of a motor vehicle (2) for carrying out the method according to any of claims 1 to 5, comprising a brake cylinder (7) and a pressure control valve (16) for each wheel (5), and an activation valve (47, 48) for each brake circuit (14, 15), which are connected in a signal-transmitting manner to a brake control unit (17) for receiving control signals (19) during a pressure control mode (18), and comprising a service brake valve (9) that can be actuated by the driver of the motor vehicle (2), wherein the brake pressures (P) in the brake cylinders (7) can be adjusted by the brake control unit (17) in a normal braking mode (29) by actuation of the service brake valve (9) in accordance with the driver braking request (32), and in a pressure control mode (18) via the corresponding activation valves (47, 48) and the corresponding pressure control valve (16), wherein the brake control unit (17)

- is designed to implement driving stability functions (45) and/or external braking requests (26) in the pressure control mode (18),
- is connected to the rotational speed sensors (23) of the wheels (5) in order to evaluate rotational speed measurement values (22, 33),
- is designed to control (27) an ideal pressure distribution ratio (54) of the brake pressure (P) at the front axle (3) to the brake pressure (P) at a rear axle (4) during the pressure control mode (18), and
- is designed to determine a pressure distribution ratio starting value (28) for the control (27) using the rotational speed measurement values (22, 33) during the normal braking mode (29),

  ∘ wherein the pressure distribution ratio starting value (28) is determined in the normal braking mode (29), in that
  ∘ a first rotational speed measurement value (22) of the front axle (3) and a second rotational speed measurement value (33) of the rear axle (4) are detected, and a reference value (24) of a movement variable (38) of the motor vehicle (2) is determined,
  ∘ the rotational speed measurement value (22) of the front axle (3) and the rotational speed measurement value (33) of the rear axle (4) are each linked to the reference value (24) in a manner representing the wheel slip (λ) at the corresponding axle (3, 4), the first slip values (34) formed in this way with respect to the front axle (3) and the second slip values (35) with respect to the rear axle (4) are set (46) in a ratio to one another, and
  ∘ the distribution index (42) determined in this way is linked (43) to a predefined pressure distribution ratio (44), wherein the pressure distribution ratio starting value (28) is determined according to the following equation: $(P_{FA}/P_{RA}) = (\lambda_{RA}/\lambda_{FA}) * (P_{FA}/P_{RA})_{nonideal}$, where the index "FA" in the equation represents a pressure and/or slip variable associated with the front axle and the index "RA" in the equation represents a pressure and/or slip variable associated with the rear axle, and $(P_{FA}/P_{RA})_{nonideal}$ represents a predefined pressure distribution ratio which is dynamically determined in the case of an electronic braking system (EBS), and

- comprises a storage element (30) for storing (31) the pressure distribution ratio starting value (28) for control (27) of the ideal pressure distribution ratio (54).

7. The brake system according to claim 6,
   **characterized in that**
   the pressure control valves (16) are arranged in one or more brake circuits (14, 15) which can be connected in each case to a pressure medium store (12, 13) via an activation valve (47, 48), each activation valve (47, 48) being electrically connected to the brake control unit (17) and being switchable by the brake control unit (17), the pressure control valves (16) of the wheels (5) of an axle (3, 4) of the motor vehicle (2) being connected to a pressure medium store (12, 13) via a common brake circuit (14, 15) having an activation valve (47, 48).

8. A motor vehicle having a brake system (1) according to claim 6 or claim 7.

**Revendications**

1. Procédé permettant le réglage de pressions de freinage (P) au niveau de freins de roue (6) d'un véhicule automobile (2), dans lequel une pression de freinage (P) au niveau des freins de roue (6) est réglée dans un mode de freinage normal (29) en fonction d'une demande de freinage de conducteur (32) déterminée par le conducteur du véhicule automobile (2), et dans lequel une unité de commande de freinage (17) pour la mise en oeuvre d'au moins une fonction de stabilité de conduite (45) et/ou de demandes de freinage externes (26) prend en charge le réglage des pressions de freinage (P) du frein de roue (6) concerné dans un mode de commande de pression (18) et détermine les pressions de freinage (P) au moins lors de la mise en oeuvre de demandes de freinage externes (26) en régulant (27) un rapport de répartition de pression idéal (54) des pressions de freinage (P) au niveau des freins de roue (6) de l'essieu avant (3) aux pressions de freinage (P) au niveau des freins de roue (6) au niveau d'un essieu arrière (4) du véhicule automobile (2), dans lequel la régulation (27) prend en compte une valeur de départ de rapport de répartition de pression (28) qui est définie dans le mode de freinage normal (29) et mémorisée (31) et tenue à disposition pour la prise en compte ultérieure dans le mode de commande de pression (18), dans lequel la valeur de départ de rapport de répartition de pression (28) est définie dans le mode de freinage normal (29) par le fait que

- une première valeur mesurée de vitesse de rotation (22) de l'essieu avant (3) et une seconde valeur mesurée de vitesse de rotation (33) de l'essieu arrière (4) sont détectées et une valeur de référence (24) d'une grandeur de mouvement (38) du véhicule automobile (2) est définie,
- la valeur mesurée de vitesse de rotation (22) de l'essieu avant (3) et la valeur mesurée de vitesse de rotation (33) de l'essieu arrière (4) sont respectivement liées à la valeur de référence (24) de manière à représenter le patinage de roue ($\lambda$) au niveau de l'essieu (3, 4) respectif, les premières valeurs de patinage (34) ainsi formées par rapport à l'essieu avant (3) et les secondes valeurs de patinage (35) par rapport à l'essieu arrière (4) sont mises en rapport l'une avec l'autre (46) et

l'indice de répartition (42) ainsi déterminé est lié (43) à un rapport de répartition de pression (44) prédéfini, dans lequel la valeur de départ de rapport de répartition de pression (28) est déterminée selon l'équation suivante : $(P_{FA}/P_{RA}) = (\lambda_{RA}/\lambda_{FA}) * (P_{FA}/P_{RA})_{nonideal}$, dans lequel l'indice « FA » dans l'équation représente une grandeur de pression et/ou de patinage associée à l'essieu avant et l'indice « RA » dans l'équation représente une grandeur de pression et/ou de patinage associée à l'essieu arrière et $(P_{FA}/P_{RA})_{nonideal}$ représente un rapport de répartition de pression prédéfini qui est défini de manière dynamique dans le cas d'un système de freinage électronique (EBS).

2. Procédé selon la revendication 1,
**caractérisé en ce que**
pour la détermination des valeurs de patinage (34, 35) à partir de la première valeur mesurée de vitesse de rotation (22) de l'essieu avant (3) et de la seconde valeur mesurée de vitesse de rotation (33) de l'essieu arrière (4), une grandeur de mouvement (38) correspondant à la grandeur de mouvement (38) du véhicule automobile (2) est déterminée et liée (36) à la valeur de référence (24).

3. Procédé selon l'une des revendications précédentes,
**caractérisé par**
la prise en compte de la vitesse (v) comme grandeur de mouvement (38).

4. Procédé selon l'une des revendications 1 à 2,
**caractérisé par**
la prise en compte de l'accélération (a) comme grandeur de mouvement (38).

5. Procédé selon l'une des revendications précédentes,
**caractérisé en ce que**
la définition de la valeur de départ de rapport de répartition de pression (28) pour la régulation (27) est effectuée pendant des freinages dans le mode de freinage normal (29) avec des accélérations (a) comprises entre -1 m/s$^2$ à -1,5 m/s$^2$.

6. Système de freinage (1) d'un véhicule automobile (2) pour la réalisation du procédé selon l'une des revendications 1 à 5, comportant, par roue (5), un cylindre de freinage (7) et une soupape de commande de pression (16) ainsi que, par circuit de freinage (14, 15), une soupape d'activation (47, 48), lesquelles sont reliées de manière à transmettre des signaux à une unité de commande de freinage (17) pour la réception de signaux de commande (19) pendant un mode de commande de pression (18), et comportant une soupape de frein de service (9) pouvant être actionnée par le conducteur du véhicule automobile (2), dans lequel les pressions de freinage (P) peuvent être réglées par l'unité de commande de freinage (17) dans les cylindres de freinage (7) dans un mode de freinage normal (29) par actionnement de la soupape de frein de service (9) selon la demande de freinage de conducteur (32) et, dans un mode de commande de pression (18), par l'intermédiaire des soupapes d'activation (47, 48) respectives et de la soupape de commande de pression (16) respective, dans lequel l'unité de commande de freinage (17)

- est configurée pour la mise en oeuvre de fonctions de stabilité de conduite (45) et/ou de demandes de freinage externes (26) dans le mode de commande de pression (18),
- est connectée à des capteurs de vitesse de rotation (23) des roues (5) pour l'évaluation de valeurs mesurées de vitesse de rotation (22, 33),
- est configurée pour la régulation (27) d'un rapport de répartition de pression idéal (54) de la pression de freinage (P) au niveau de l'essieu avant (3) à la pression de freinage (P) au niveau d'un essieu arrière (4) pendant le mode de commande de pression (18) et
- est configurée pour la définition d'une valeur de départ de rapport de répartition de pression (28) pour la régulation (27) en utilisant les valeurs mesurées de vitesse de rotation (22, 33) pendant le mode de freinage normal (29),

   ◦ dans lequel la valeur de départ de rapport de répartition de pression (28) est définie dans le mode de freinage normal (29) par le fait que
   ◦ une première valeur mesurée de vitesse de rotation (22) de l'essieu avant (3) et une seconde valeur mesurée de vitesse de rotation (33) de l'essieu arrière (4) sont détectées et une valeur de référence (24) d'une grandeur de mouvement (38) du véhicule automobile (2) est définie,
   ◦ la valeur mesurée de vitesse de rotation (22) de l'essieu avant (3) et la valeur mesurée de vitesse de rotation (33) de l'essieu arrière (4) sont respectivement liées à la valeur de référence (24) de manière à représenter le patinage de roue ($\lambda$) au niveau de l'essieu (3, 4) respectif, les premières valeurs de patinage (34) ainsi formées par rapport à l'essieu avant (3) et les secondes valeurs de patinage (35) par rapport à l'essieu arrière (4) sont mises en rapport l'une avec l'autre (46) et
   ◦ l'indice de répartition (42) ainsi déterminé est lié (43) à un rapport de répartition de pression (44) prédéfini, dans lequel la valeur de départ de rapport de répartition de pression (28) est déterminée selon l'équation suivante :

   $(P_{FA}/P_{RA}) = (\lambda_{RA}/\lambda_{FA}) * (P_{FA}/P_{RA})_{nonideal}$, dans lequel l'indice « FA » dans l'équation représente une grandeur de pression et/ou de patinage associée à l'essieu avant et l'indice « RA » dans l'équation représente une grandeur de pression et/ou de patinage associée à l'essieu arrière et $(P_{FA}/P_{RA})_{nonideal}$ représente un rapport de répartition de pression prédéfini qui est défini de manière dynamique dans le cas d'un système de freinage électronique (EBS), et

- présente un élément de stockage (30) pour le stockage (31) de la valeur de départ de rapport de répartition de pression (28) pour la régulation (27) du rapport de répartition de pression idéal (54).

7. Système de freinage selon la revendication 6,
   **caractérisé en ce que**
   les soupapes de commande de pression (16) sont disposées dans un ou plusieurs circuits de freinage (14, 15), lesquelles peuvent être reliées par l'intermédiaire de respectivement une soupape d'activation (47, 48) à un réservoir de fluide de pression (12, 13), dans lequel chaque soupape d'activation (47, 48) est connectée électriquement à l'unité de commande de freinage (17) et peut être commutée par l'unité de commande de freinage (17), dans lequel les soupapes de commande de pression (16) des roues (5) d'un essieu (3, 4) du véhicule automobile (2) sont reliées par l'intermédiaire d'un circuit de freinage (14, 15) commun avec une soupape d'activation (47, 48) à un réservoir de fluide de pression (12, 13).

8. Véhicule automobile comportant un système de freinage (1) selon la revendication 6 ou 7.

EP 3 500 461 B1

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009058154 A1
- EP 0445575 A1
- DE 102008032544 A1
- WO 2011073415 A1